# EUROPÄISCHE PATENTANMELDUNG

(11) **EP 1 949 831 A1**
(43) Veröffentlichungstag der Anmeldung: **30.07.2008**
(21) Anmeldenummer: 08100108.3
(22) Anmeldetag: 04.01.2008
(51) Int. Cl.: A47J 36/16, A47J 47/02

(54) **Behälter**

(30) Priorität: 26.01.2007 DE 202007001160 U
(71) Anmelder: Cofresco Frischhalteprodukte GmbH & Co. KG, 32427 Minden (DE)
(72) Erfinder: Arning, Hans-Jürgen, 32312 Lübbecke (DE)
(74) Vertreter: Dantz, Jan Henning

(57) **Zusammenfassung**

Ein Behälter (1), insbesondere zur Aufbewahrung und zum Garen von Nahrungsmitteln, weist eine Schale (2) aus einem steifen Material auf, die einen Boden (4) und einen den Boden (4) umgebenden nach oben hervorstehenden Rand (5) besitzt, wobei mindestens ein auswechselbarer Einsatz (3, 13) aus einem flexiblen Material vorgesehen ist, der im Wesentlichen formschlüssig in die Schale (2) einfügbar ist. Dadurch kann die Schale (2) aus steifem Material dem Behälter die Stabilität geben, so dass in die auswechselbaren Einsätze (3, 13) insbesondere Nahrungsmittel gelagert werden können.

## Beschreibung

Die vorliegende Erfindung betrifft einen Behälter, insbesondere zur Aufbewahrung und zum Garen von Nahrungsmitteln, mit einer Schale aus einem steifen Material, die einen Boden und ein den Boden umgebenden nach oben hervorstehenden Rand aufweist.

Es sind Behälter aus Kunststoff zum Aufbewahren von Nahrungsmitteln bekannt, die über einen Deckel verschließbar sind. Dabei können auch mehrere Behälter ineinander gefügt werden, so dass ein großer Behälter ein oder mehrere kleinere Behälter aus Kunststoff aufnimmt. Mit solchen Behältern können Nahrungsmittel zwar gelagert werden, allerdings sind diese nicht hitzebeständig und können daher nicht im Backofen bei höheren Temperaturen eingesetzt werden. Zum Garen und Backen von Nahrungsmitteln werden daher andere Behälter benötigt.

Es ist daher Aufgabe der vorliegenden Erfindung einen Behälter zu schaffen, der flexibel zur Aufbewahrung und zum Garen von Nahrungsmitteln einsetzbar ist. Zudem soll der Behälter leicht zu reinigen sein.

Diese Aufgabe wird mit einem Behälter mit den Merkmalen des Anspruches 1 gelöst.

Der Behälter umfasst eine Schale aus einem steifen Material und mindestens einen auswechselbaren Einsatz aus einem flexiblen Material, der im Wesentlichen formschlüssig in die Schale einfügbar ist. Dadurch kann die Schale aus steifem Material dem Behälter die Stabilität geben, so dass in die auswechselbaren Einsätze jeweils Nahrungsmittel einfügbar sind. Der mindestens eine auswechselbare Einsatz besteht zwar aus einem flexiblen Material, das aus der Schale herausnehmbar ist und dadurch leicht zu reinigen ist. Zudem kann durch das Auswechseln der Einsätze der Behälter äußerst flexibel genutzt werden.

Gemäß einer bevorzugten Ausführungsform sind die Schale und der mindestens eine auswechselbare Einsatz aus unterschiedlichen hitzebeständigen Materialien hergestellt. Dadurch kann der Behälter mit den Einsätzen einerseits zur Aufbewahrung von Nahrungsmitteln und andererseits zum Garen oder Backen eingesetzt werden. Dies ist eine erhebliche Erweiterung des Anwendungsbereiches, da für die unterschiedlichen Zwecke ein und derselbe Behälter verwendet werden kann. Die Schale kann beispielsweise aus Glas hergestellt sein, während sich für den mindestens einen Einsatz als Material Silikon als vorteilhaft herausgestellt hat.

Um die Nahrungsmittel auch dauerhaft lagern zu können, ist vorzugsweise jeder Einsatz mittels eines Deckels verschließbar. Der Deckel kann dabei aus Kunststoff hergestellt sein und formschlüssig in den Einsatz aus flexiblem Material eingreifen.

Um die Handhabung beim Auswechseln und Befüllen der Einsätze zu erleichtern, ist an jedem Einsatz mindestens ein von einem Rand hervorstehendes Griffelement ausgebildet.

Vorzugsweise weist der Behälter für die Schale mehrere Sätze an Einsätzen in unterschiedlicher Größe auf. Ein Satz an Einsätzen ist dabei jeweils nur in die Schale einfügbar, so dass die anderen Einsätze nicht verwendet werden. Dadurch kann der Benutzer eine Unterteilung in dem Behälter vornehmen, beispielsweise wenn unterschiedliche Nahrungsmittel in der Schale gelagert oder gegart werden sollen. Dann kann ein Einsatz jeweils für ein Nahrungsmittel verwendet werden. Ein erster Einsatz kann dabei die Schale im Wesentlichen formschlüssig ausfüllen, also das gesamte Volumen der Schale als Nutzfläche besitzen. Ferner können zwei zweite Einsätze vorgesehen sein, die die Schale zur Hälfte ausfüllen. Dann können diese beiden Einsätze mit unterschiedlichen Nahrungsmitteln befüllt werden, wobei die Einsätze das Halbe Füllvolumen der Schale besitzen. Für eine feinere Unterteilung können auch vier Einsätze vorgesehen sein, die jeweils ein Viertel der Schale ausfüllen.

Um die Einsätze besonders stabil in der Schale aufzunehmen, können die Einsätze dabei jeweils schalenförmig ausgebildet sein und am Rand eine Kante aufweisen, die zumindest teilweise auf der Oberseite des Randes der Schale aufliegt.

Die Erfindung wird nachfolgend anhand mehrerer Ausführungsbeispiele mit Bezug auf die beigefügten Zeichnungen erläutert. Es zeigen:
- Figuren 1A bis 1D: mehrere Ansichten eines erfindungsgemäßem Behälters mit einem Einsatz;
- Figur 2: eine perspektivische Ansicht eines Behälters mit vier Einsätzen;
- Figur 3: eine perspektivische Ansicht eines Einsatzes des Behälters der Figur 2, und
- Figur 4: eine Ansicht eines Deckels für einen Einsatz der Figur 3.

Ein Behälter 1 umfasst eine Schale 2 aus einem steifen Material, insbesondere aus Glas, in der ein Einsatz 3 aus einem flexiblen Material, insbesondere Silikon eingefügt ist. Die Schale 2 und der Einsatz 3 liegen dabei weitgehend formschlüssig aneinander an.

Die Schale 2 umfasst einen Boden 4, der im Wesentlichen rechteckig ausgebildet ist und an dem ein nach oben hervorstehender umlaufender Rand 5 vorgesehen ist. An gegenüberliegenden Stirnkanten der Schale 2 sind horizontal hervorstehende Griffabschnitte 7 ausgebildet. An dem Rand 5 ist eine umlaufende obere Kante 6 vorgesehen.

Der Einsatz 3 umfasst ebenfalls einen Boden 8, der an dem Boden 4 der Schale 2 anliegt, sowie einen umlaufenden Rand 9, der an dem Rand 5 der Schale 2 anliegt. Der Einsatz 3 besteht aus dünnem Material, das eine Dicke von beispielsweise 0,5 mm bis 4 mm, vorzugsweise 2 mm bis 3 mm haben kann, so dass die Schale 2 das flexible Material des Einsatzes 3 abstützt. Der Einsatz 3 weist ferner eine umlaufende obere Kante 10 auf, die sich an den Rand 9 anschließt und auf der oberen Kante 6 der Schale 2 abstützt. An einer Stirnkante des Einsatzes 3 ist ein hervorstehender Griffabschnitt 11 ausgebildet, der an dem Griffelement 7 der Schale 2 angeordnet ist. Dadurch kann der Einsatz 3 einfach gegriffen und aus der Schale 2 entfernt werden.

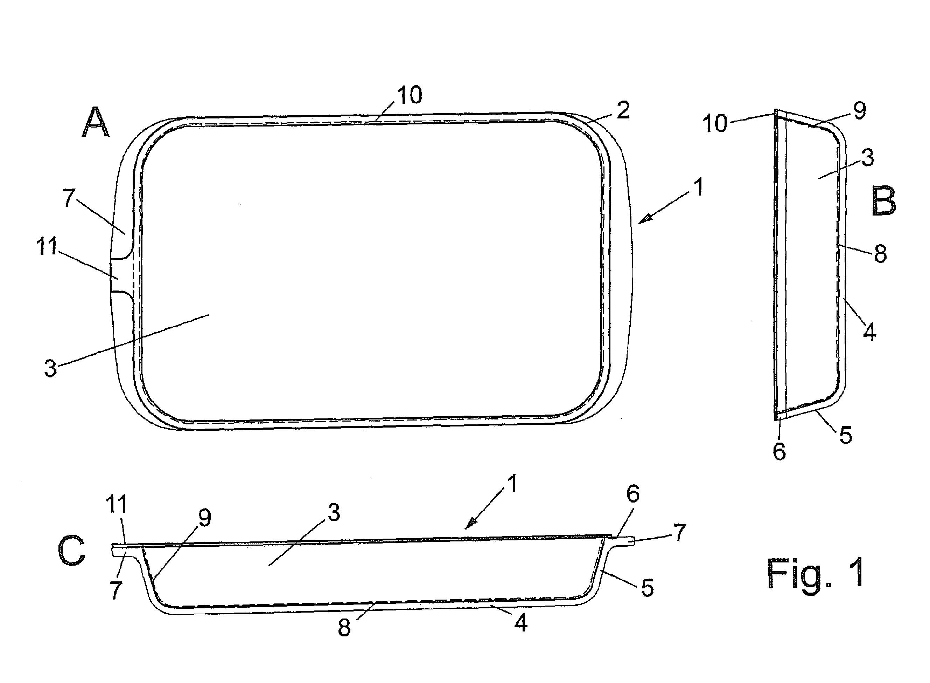

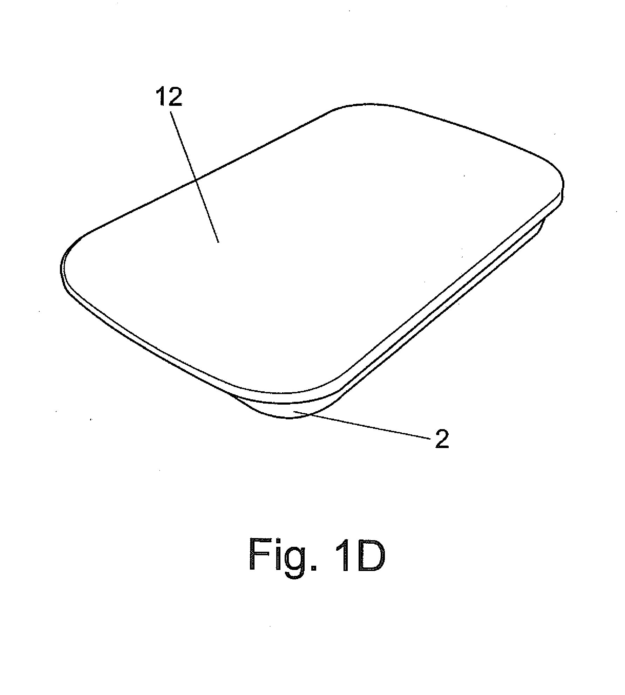

In Figur 1D ist die Schale 2 über einen Deckel 12 verschlossen, der aus Kunststoff besteht und für eine Abdichtung des Einsatzes 3 sorgen kann, insbesondere wenn Lebensmittel zum Lagern darin enthalten sind.

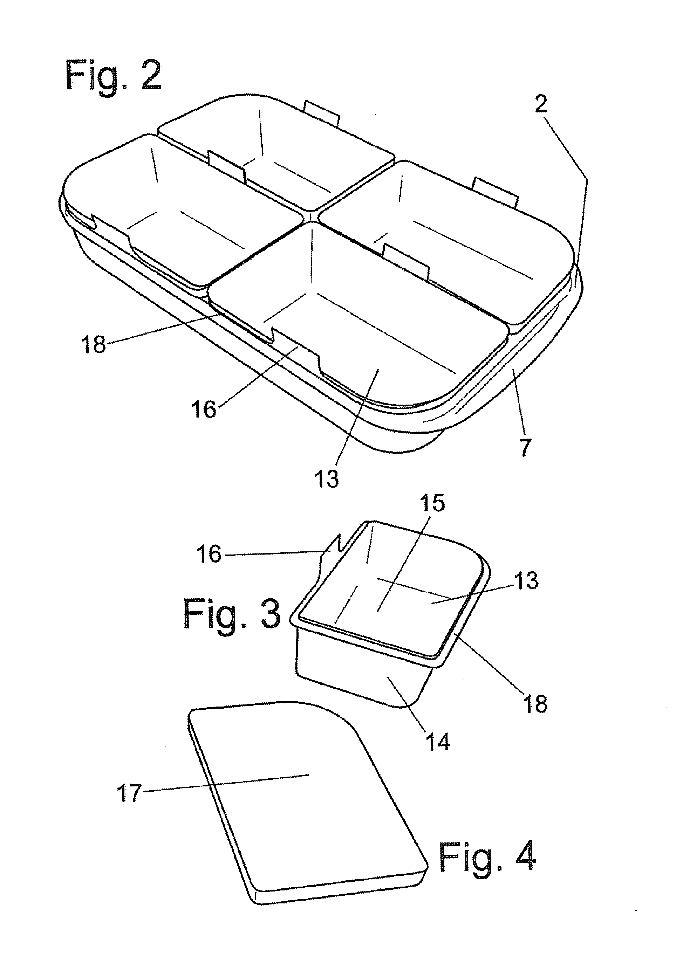

In Figur 2 ist die Schale 2 mit vier Einsätzen 13 gezeigt, die im Wesentlichen formschlüssig in der Schale 2 aufgenommen sind. Jeder Einsatz 13 ist schalenförmig ausgebildet und umfasst einen Boden 15 sowie einen umlaufenden Rand 14, wobei an dem Rand 14 eine Kante 18 vorgesehen ist, die wieder auf der Kante 6 der Schale 2 aufliegt und dort abgestützt ist. An dem Rand 14 ist ferner ein nach oben hervorstehendes Griffelement 16 angeformt.

In Figur 4 ist ein Deckel 17 für einen Einsatz 13 dargestellt, der einen Einsatz 13 dicht verschließen kann. Der Deckel 17 ist aus Kunststoff ausgebildet und an die Kontur des Einsatzes 13 angepasst.

Ein Behälter kann eine Schale 2 und mehrere Sätze an Einsätzen 3 bzw. 13 umfassen, so dass eine flexible Handhabung möglich ist. Denn wenn mehrere Einsätze 13 eingesetzt werden, können in jeden Einsatz 13 unterschiedliche Nahrungsmittel eingefüllt werden, um diese zu garen, zu backen oder zu lagern. Die Einsätze 13 sind auf einfache Weise aus der Schale 2 herausnehmbar und können aufgrund des flexiblen Materials leicht gereinigt werden.

In den Figuren ist eine Schale 2 mit einem Einsatz 3 oder vier Einsätzen 4 gezeigt. Es ist natürlich auch möglich, zwei Einsätze vorzusehen, die die Schale 2 zur Hälfte ausfüllen. Die Anordnung von zwei oder vier Einsätzen hat den Vorteil, dass diese jeweils baugleich ausgeführt werden können. Es ist natürlich auch möglich, für die Schale 2 drei oder fünf Einsätze bereitzustellen.

Die Einsätze 13 können auch farblich unterschiedlich gestaltet sein, um dem Benutzer Informationen über die darin angeordneten Gegenstände bzw. Nahrungsmittel zu geben. Zudem können auch Markierungen oder Prägungen vorgesehen sein.

## Patentansprüche

1. Behälter (1), insbesondere zur Aufbewahrung und zum Garen von Nahrungsmitteln, mit einer Schale (2) aus einem steifen Material, die einen Boden (4) und einen den Boden (4) umgebenden nach oben hervorstehenden Rand (5) aufweist, **gekennzeichnet durch** mindestens einen auswechselbaren Einsatz (3, 13) aus einem flexiblen Material, der im Wesentlichen formschlüssig in die Schale (2) einfügbar ist.

2. Behälter nach Anspruch 1, **dadurch gekennzeichnet, dass** die Schale (2) und der mindestens eine auswechselbare Einsatz (3, 13) aus unterschiedlichen hitzebständigen Materialien hergestellt sind.

3. Behälter nach Anspruch 1 oder 2, **dadurch gekennzeichnet, dass** die Schale (2) aus Glas hergestellt ist.

4. Behälter nach einem der Ansprüche 1 bis 3, **dadurch gekennzeichnet, dass** der mindestens eine Einsatz (3, 13) aus Silikon hergestellt ist.

5. Behälter nach einem der Ansprüche 1 bis 4, **dadurch gekennzeichnet, dass** jeder Einsatz (3, 13) mittels eines Deckels (12, 17) verschließbar ist.

6. Behälter nach Anspruch 5, **dadurch gekennzeichnet, dass** jeder Deckel (12, 17) aus Kunststoff hergestellt ist.

7. Behälter nach einem der Ansprüche 1 bis 6, **dadurch gekennzeichnet, dass** an jedem Einsatz (3, 13) mindestens ein von einem Rand (10) hervorstehendes Griffelement (11, 16) ausgebildet ist.

8. Behälter nach einem der Ansprüche 1 bis 7, **dadurch gekennzeichnet, dass** für die Schale (2) mehre Sätze an Einsätzen (3, 13) in unterschiedlicher Größe vorgesehen sind.

9. Behälter nach einem der Ansprüche 1 bis 8, **dadurch gekennzeichnet, dass** ein erster Einsatz (3) die Schale (2) im Wesentlichen formschlüssig ausfüllt.

10. Behälter nach einem der Ansprüche 1 bis 9, **dadurch gekennzeichnet, dass** zwei zweite Einsätze vorgesehen sind, die die Schale (2) zur Hälfte ausfüllen.

11. Behälter nach einem der Ansprüche 1 bis 10, **dadurch gekennzeichnet, dass** vier dritte Einsätze (13) vorgesehen sind, die jeweils ein Viertel der Schale (2) ausfüllen.

12. Behälter nach einem der Ansprüche 1 bis 11, **dadurch gekennzeichnet, dass** die Einsätze (3, 13) jeweils schalenförmig ausgebildet sind und am Rand eine Kante (10) aufweisen, die zumindest teilweise auf der Oberseite (6) des Randes (5) der Schale (2) aufliegt.
